# EUROPÄISCHE PATENTANMELDUNG

(11) **EP 0 898 280 A2**
(43) Veröffentlichungstag der Anmeldung: **24.02.1999**
(21) Anmeldenummer: 98114239.1
(22) Anmeldetag: 28.07.1998
(51) Int. Cl.: G11B 33/12, G11B 33/14

(54) **Steckbare Haltevorrichtung für Festplatten-Speicherlaufwerke**

(30) Priorität: 19.08.1997 DE 29714827 U
(71) Anmelder: Siemens Nixdorf Informationssysteme AG, 33106 Paderborn (DE)
(72) Erfinder: Neukam, Wilhelm, 86159 Augsburg (DE)
(74) Vertreter: Epping, Wilhelm, Dr.-Ing.

(57) **Zusammenfassung**

Die Haltevorrichtung besteht aus einem schalenartigen Einschubrahmen für ein an der Bodenfläche dieses Einschubrahmens festschraubbaren Festplatten-Speicherlaufwerks und einer den Einschubrahmen bzw. das Speicherlaufwerk überdeckenden Schirmhaube, die einerseits an den Seitenflächen nach innen gerichtete Federelemente zur Kontaktierung mit den Seitenwänden des Einschubrahmens und andererseits nach aussen gerichtete Federelemente zur Kontaktierung mit einem den Einschubrahmen aufnehmenden Haltekäfig aufweist. An der Stirnfläche der Schirmhaube sind an deren Unterkante ein oder mehrere Eederzungen vorgesehen, die sich an der Bodenfläche federn abstützt.

## Beschreibung

Die Erfindung betrifft eine steckbare Haltevorrichtung nach den Merkmalen des Oberbegriffs des Anspruchs 1.

Neben fest in Rechnergehäusen eingebauten Festplatten-Speichersystemen gibt es auch sogenannte Wechselplatten, die auf einem Einschubrahmen montiert in einen gegebenenfalls mehrere Einbauplätze aufweisenden Führungsrahmen eingeschoben werden. Bei vollständig eingeschobener Festplatte wird die an der Rückseite des Einschubrahmens vorgesehene Verbindung zwischen Festplatte und Controller hergestellt und zur Sicherstellung dieser Verbindung der Einschubrahmen verriegelt. Um die Festplatte wieder entnehmen zu können, muss die Verriegelung, zum Beispiel über einen Hebel, wieder gelöst werden. Derartige Wechselplatten bieten gegenüber fest installierten Festplatten eine höhere Mobilität und Sicherheit. Ein- und Ausbau derartiger Wechselplatten sollen dabei einfach durchgeführt werden können, ohne dass die notwendigen Maßnahmen zur exakten störungsfreien Kontaktierung sowie zur Ver- und Entriegelung vernachlässigt werden. Darüber hinaus sind diese Laufwerkskomponenten im Hinblick auf eine gute Abschirmung (EMV) und Funkentstörung so zu gestalten, dass störende Wirkungen nach aussen weitgehend vermieden werden.

Der vorliegenden Erfindung liegt nun die Aufgabe zugrunde, eine steckbare Haltevorrichtung für Festplatten-Speicherlaufwerke der eingangs genannten Art in der Weise auszubilden, dass sie nicht nur berührungssicher gehalten, sondern auch den Anforderungen bezüglich Abschirmung (EMV) und Funkentstörung ausreichend gerecht werden.

Die Lösung dieser Aufgabe ergibt sich erfindungsgemäß durch die Merkmale des Anspruchs 1. Vorteilhafte Weiterbildungen der Erfindung sind in Unteransprüchen angegeben.

Im Folgenden wird ein Ausführungsbeispiel der Erfindung anhand der Zeichnung näher erläutert. Dabei zeigen
- Figur 1: eine erfindungsgemäß ausgebildete Haltevorrichtung in perspektivischer Explosionsdarstellung
- Figur 2: die Haltevorrichtung gemäß Figur 1 in montiertem Zustand.

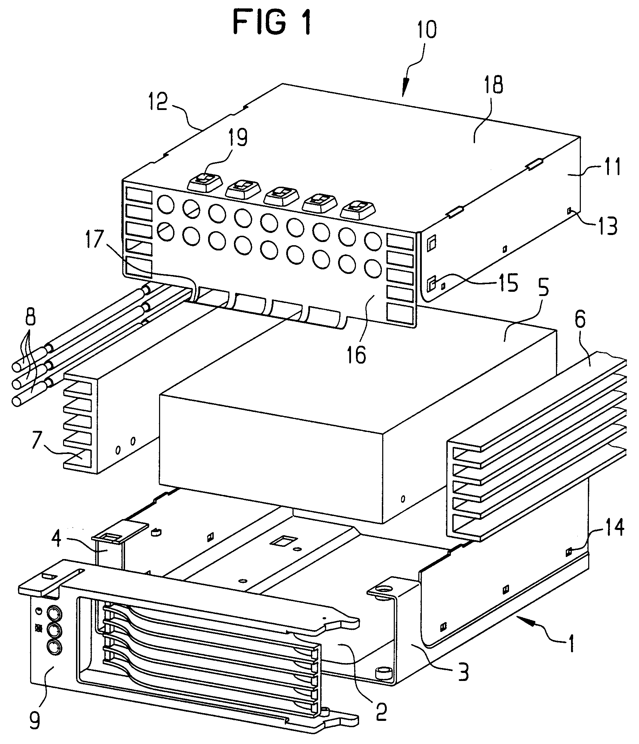

Die Figur 1 zeigt einen rechteckigen, schalenartigen Einschubrahmen 1 mit einer Bodenplatte 2 und zwei Seitenwänden 3, 4, in den ein Festplatten-Speicherlaufwerk 5 einsetzbar und mittels Schrauben an der Bodenplatte 2 festschraubbar ist. Für Laufwerke 5, die eine höhere Kühlleistung erfordern, kann im Raum zwischen Laufwerk 5 und den beiden Seitenwänden 3, 4 jeweils ein Kühlkörper 6, 7 eingefügt werden. Diese Kühlkörper 6, 7 bestehen jeweils aus einer an der jeweiligen Seitenfläche des Laufwerks 5 anliegenden Kühlkontaktfläche und mehreren horizontal ausgerichteten Kühlrippen, zwischen denen, wie am Beispiel des Kühlkörpers 6 gezeigt, mehrere Lichtleiter 8 für die Anzeige von Betriebszuständen an der Frontseite des Laufwerk-Einschubrahmens eingebettet sein können.

Nachdem das Laufwerk 5 am Einschubrahmen 1 festgeschraubt, die Kühlkörper 6, 7 und die Lichtleiter 8 eingesetzt und ein Verriegelungshebel 9 am vorderen Ende der Seitenwand 4 des Einschubrahmens 1 schwenkbar befestigt sind, wird zum Zwecke einer ausreichenden EMV-Schirmung eine den Einschubrahmen 1 mit Ausnahme dessen Rückseite überdeckende Schirmhaube 10 aufgesetzt. Diese Schirmhaube 10 weist einerseits an den Seitenflächen 11, 12 nach innen gerichtete Federelemente 13 auf, die zur Kontaktierung mit dem Einschubrahmen 1 in an dessen Seitenwänden 3, 4 vorgesehenen lochartige Aussparungen 14 eintauchen. Ferner weist die Schirmhaube 10 an den beiden Seitenflächen nach aussen gerichtete Federelemente 15 auf, die den Kontakt zu dem den Einschubrahmen 1 aufnehmenden Haltekäfig herstellen.

Darüber hinaus weist die Stirnfläche 16 der Schirmhaube 10 an ihrer Unterkante mehrere Federzungen 17 auf, die sich an der Bodenplatte 2 des Einschubrahmens 1 federnd abstützen. Schließlich sind an der Deckfläche 18 der Schirmhaube 10 weitere warzenartige Federkontakte 19 vorgesehen, die bei mehreren übereinander angeordneten Festplatten-Speicherlaufwerken in Kontakt zum darüber angeordneten Einschubrahmen treten.

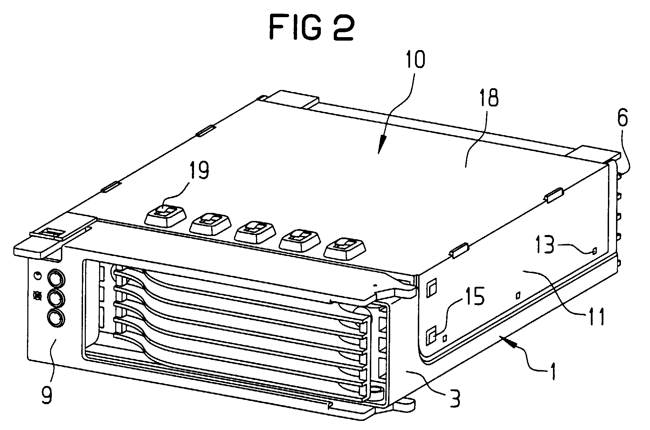

Die Figur 2 zeigt dei Haltevorrichtung gemäß Figur 1 in montiertem Zustand. Sie zeigt den an der Frontseite des Einschubrahmens 1 vorgesehenen Verriegelungshebel 9 und die auf den Einschubrahmen 1 aufgesetzte Schirmhaube 10, wobei die Stirnfläche der Schirmhaube 10 hinter dem Verriegelungshebel 9 verläuft. Die Figur 2 zeigt ferner die nach innen und aussen gerichteten Federelemente 13 und 15 sowie die an der Deckflache 18 vorgesehenen Federkontakte 19. Am hinteren Rand der Seitenwand 3 des Einschubrahmens 1 sind noch die Kühlrippen des Kühlkörpers 6 zu erkennen.

## Patentansprüche

1. Haltevorrichtung für ein Festplatten-Speicherlaufwerk, unter Verwendung eines auf Führungsschienen eines, gegebenenfalls mehrere übereinanderliegende Einbauplätze aufweisenden Haltekäfigs einschiebbaren, das Festplatten-Speicherlaufwerk aufnehmenden, schalenartigen Einschubrahmens mit an den Seitenwänden im Bereich von laufwerkseitigen Gewindebohrungen vorgesehenen lochartigen Aussparungen,
**gekennzeichnet durch** eine den Einschubrahmen (1) mit Ausnahme der Rückseite überdeckenden Schirmhaube (10), die einerseits an den Seitenflächen nach innen gerichtete Federelemente (13) zur Kontaktierung mit den Seitenwänden (3,4) des Einschubrahmens, andererseits nach aussen gerichtete Federelemente (15) zur Kontaktierung mit dem Haltekäfig aufweist, und deren Stirnfläche (16) an der Unterkante wenigstens eine an der Bodenfläche (2) des Einschubrahmens (1) sich abstützende Federzunge (17) aufweist.

2. Haltevorrichtung nach Anspruch 1,
**dadurch gekennzeichnet,**
dass an der Deckfläche (18) der Schirmhaube (10) weitere Federkontakte (19) vorgesehen sind, die bei mehreren übereinander angeordneten Festplatten-Speicherlaufwerken in Kontakt zum darüber angeordneten Einschubrahmen treten.

3. Haltevorrichtung nach Anspruch 1 oder 2,
**dadurch gekennzeichnet,**
dass im Raum zwischen wenigstens einer Seitenwand (3,4) des Einschubrahmens (1) und des in seinen Abmessungen etwas schmäleren Speicherlaufwerks (5) wenigstens ein Kühlkörper (6,7) vorgesehen ist.
